# EUROPEAN PATENT SPECIFICATION

(11) **EP 1 672 776 B1**
(45) Date of publication and mention of the grant of the patent: **14.04.2010**
(21) Application number: 05025194.1
(22) Date of filing: 18.11.2005
(51) Int. Cl.: H02M 7/5387, H02H 9/00

(54) **Interconnected generator system**
Zwischengeschaltetes Generatorsystem
Système de générateur interconnecté

(30) Priority: 20.12.2004 JP 2004366964
(43) Date of publication of application: 21.06.2006
(73) Proprietor: SANYO ELECTRIC CO. LTD, Moriguchi-shi, Osaka-fu (JP); SANYO AIR-CONDITIONERS CO., LTD., Ora-gun, Gunma-ken (JP)
(72) Inventor: Onizuka, Keigo, Ora-gun, Gunma-ken (JP); Makino, Yasuhiro, Oosato-gun, Saitama-ken (JP)
(74) Representative: Leitner, Waldemar

(56) References cited:
- EP-A- 1 271 742
- WO-A-97/10635
- US-A- 5 894 396
- PATENT ABSTRACTS OF JAPAN vol. 2000, no. 22, 9 March 2001 (2001-03-09) & JP 2001 135204 A (HITACHI LTD), 18 May 2001 (2001-05-18)

## Description

### BACKGROUND OF THE INVENTION

### Field of the Invention

The present invention relates to an interconnected generator system capable of converting DC power generated therein into AC power and feeding it to a commercial AC power system interconnected (linked) thereto.

### Description of the Related Art

A conventional interconnected generator system (such as an interconnected generator system shown in the Patent Document 1 (JP-A 2003-9398), for example) is described with reference to Fig. 4. Fig. 4 is a circuit diagram of the conventional interconnected generator system. A solar cell 01 is employed to generate DC power, which is boosted at a booster circuit 02. The boosted DC power is pulse-width modulated at an inverter circuit 03 and converted into AC power. The AC power is smoothed through a current smoothing circuit 04 and fed via a system open/close relay 06 to a commercial power system 07. The current smoothing circuit 04 includes a reactor 011 and a condenser 012.

The solar cell 01 generates power in the daytime but not at night. Accordingly, the system open/close relay 06 is actuated close in the daytime and open at night. When the system open/close relay 06 turns from open to close, the condenser 012 in the current smoothing circuit 04 discharges. In this case, rush current may flow in the condenser 012 at the instant of closing the system open/close relay 06. This rush current may also flow in the system open/close relay 06 as well as a current sensor 016 for AC output current feedback. As a result, the system open/close relay 06 may be welded at contacts thereof and the current sensor 016 may be deflectively excited.

The problem to be solved lies in that rush current may flow in the condenser of the current smoothing circuit when the system open/close relay turns close and, as a result of the rush current, the system open/close relay may be welded at contacts and the current sensor may be deflectively excited.

An interconnected generator system having the features of the pre-characterizing part of claim 1 is known from EP-A-1271742 in the name of the applicant.

This document discloses an interconnected generator system, comprising a DC power generator means operative to generate DC power, an inverter circuit operative to convert the DC power from the DC power generator means into AC power, a current smoothing circuit including a condenser and operative to smooth the AC power converter at invertercircuit, anda systemopen/close relay operative to connect the current smoothing circuit to an AC power system in an open/close switchable manner.

Patent abstracts of Japan, vol. 2000, no. 22, 9 discloses an interconnected generator system, in which, to prevent a relay from malfunctioning, caused by abnormal voltage drop due to a high transcendent current, a bypass is provided between a primary side of the transformer and a first breaker which is in parallel with a second breaker and a resistance. Rush current for exciting the transformer is reduced with the resistance and adverse effects of the rush current from the transformer can be prevented.

### SUMMARY OF THE INVENTION

It is an object of the present invention to avoid in rush current at the time of closing the system open/close relay, the preventing welding of relay contacts and a deflective excitation of the sensor for AC output current feedback.

This object is solved by an interconnected generator system having the features of the characterizing part of claim 1.

In the present invention, the bypass circuit includes the positive thermistor and the bypass open/close relay. When the bypass open/close relay is closed, the bypass circuit connects the current smoothing circuit to the AC power system via the positive thermistor. This is effective to suppress the current from the AC power system by the positive thermistor and charge the condenser in the current smoothing circuit. Therefore, closing the system open/close relay after charging up the condenser in the current smoothing circuit can prevent rush current from flowing in the condenser. As a result, the welding of contacts in the system open/close relay and the deflective excitation of the current sensor can be prevented.

### BRIEF DESCRIPTION OF THE DRAWINGS

Fig. 1 is a circuit diagram of a first example of the interconnected generator system in the present invention;
Fig. 2 is a flowchart on closing a system open/close relay;
Fig. 3 is a circuit diagram of a second example of the interconnected generator system; and

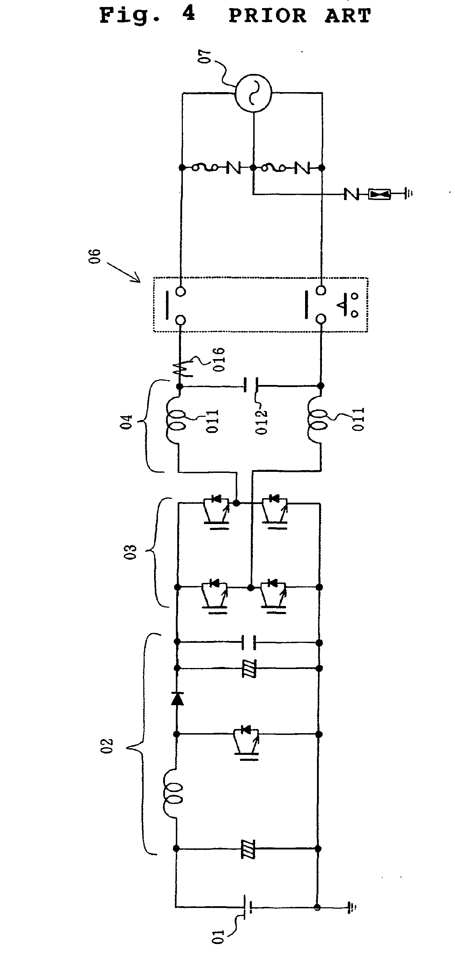

Fig. 4 is a circuit diagram of a conventional interconnected generator system.

### DETAILED DESCRIPTION OF THE INVENTION

The object to prevent the welding of contacts in the system open/close relay and the deflective excitation of the current sensor can be achieved by the bypass circuit provided to bypass the system open/close relay to connect the current smoothing circuit to the AC power system. When the bypass circuit closes the bypass open/close relay to connect the current smoothing circuit to the AC power system via the positive thermistor, it is possible to suppress the current from the AC power system by the positive thermistor and charge the condenser in the current smoothing circuit.

### EXAMPLE 1

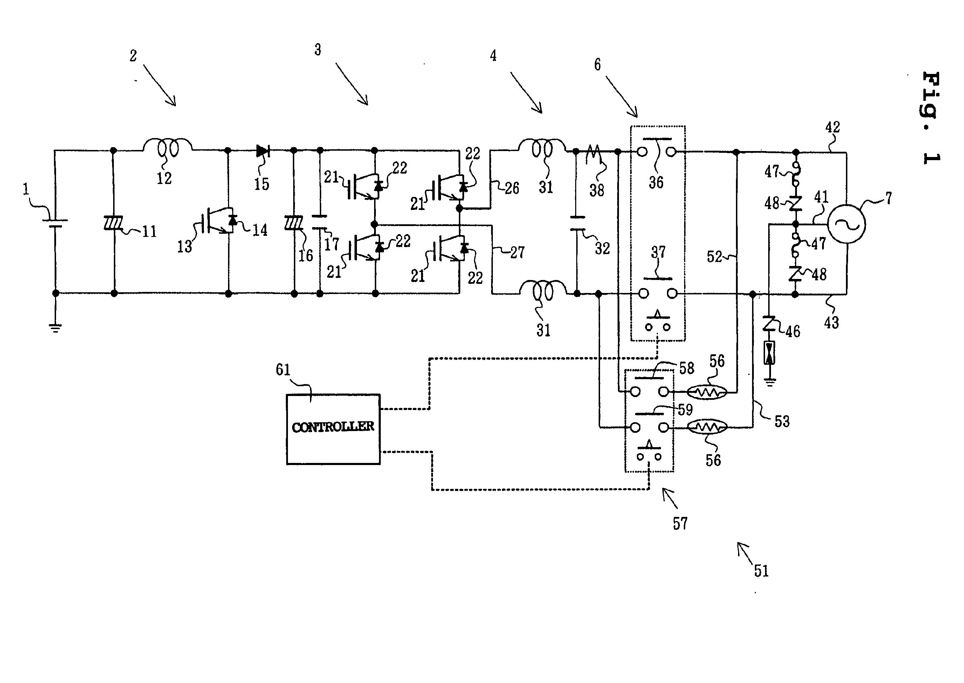

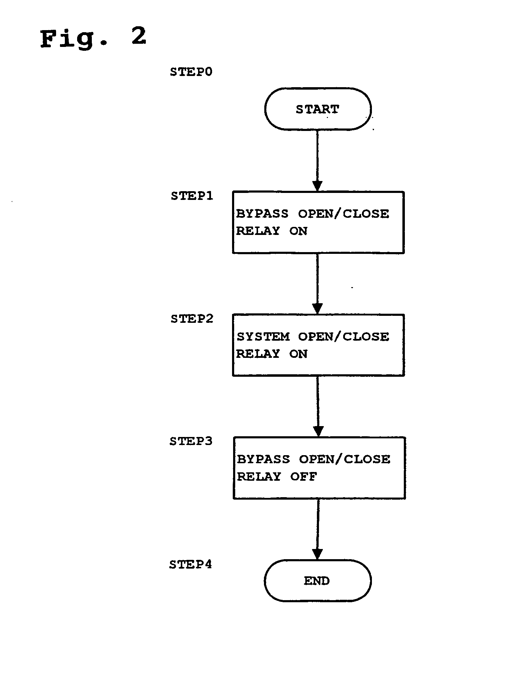

A first example of the interconnected generator system in the present invention is described next with reference to Figs. 1 and 2. Fig. 1 is a circuit diagram of the first example of the interconnected generator system in the present invention. Fig. 2 is a flowchart on closing a system open/close relay.

In Fig. 1 the interconnected generator system is similar to the conventional interconnected generator system and includes a solar cell 1 as a DC power generator means to generate DC power, which is boosted at a booster circuit 2. The boosted DC power is pulse-width modulated at an inverter circuit 3 and converted into AC power. The AC power is smoothed through a current smoothing circuit 4 and fed via a system open/close relay 6 to single-phase three wires in an AC power system or commercial power system 7.

The booster circuit 2 is operative to provide a boosted voltage higher than the system voltage of the commercial power system 7. It includes a smoothing condenser 11, a choke coil 12, a switching element 13, diodes 14, 15, and condensers 16, 17.

The inverter circuit 3 includes a plurality of bridged switching elements 21, and diodes 22 (flywheel diodes) provided respectively corresponding to the switching elements 21. The DC power boosted at the booster circuit 2 is converted into AC power in a sinusoidal waveform having almost the same phase and frequency as that of the AC power from the commercial power system 7. Two wires 26, 27 extend from the inverter circuit 3 toward the commercial power system 7.

The current smoothing circuit 4 includes reactors 31 respectively provided in serial with the wires 26, 27 from the inverter circuit 3, and a condenser 32 connected between ends of the reactors 31 close to the commercial power system 7. This circuit is operative to smooth the AC power converted at the inverter circuit 3.

The system open/close relay 6 includes a first relay section 36 and a second relay section 37 in parallel corresponding to the wires 26, 27. A sensor 38 for AC output current feedback is provided between the current smoothing circuit 4 and the system open/close relay 6.

The commercial power system 7 includes three wires 41, 42, 43 . The neutral line or the wire 41 is grounded via a varistor 46. The external lines or the other two wires 42, 43 are respectively connected to the relay sections 36, 37 in the system open/close relay 6. The neutral line or the wire 41 is connected to the external lines or the other two wires 42, 43 through a fuse 47 and a varistor 48.

Furthermore, a bypass circuit 51 is provided in this example to bypass the system open/close relay 6. The bypass circuit 51 includes bypass sections 52, 53 corresponding to the relay sections 36, 37 in the system open/close relay 6. Provided in serial on the bypass sections 52, 53 are positive thermistors (so-called posistors) 56, and relay sections 58 , 59 in a bypass open/close relay 57.

A controller 61 or control means including a microcomputer and so forth is also provided and connected to various components of the interconnected generator system in an input/output-operable manner. In particular, as the components associated with the present invention, the system open/close relay 6 and the bypass open/close relay 57 are connected to the output ports of the controller 61. The controller 61 includes a timer, and a storage unit to store various settings.

The flow on closing the system open/close relay is described based on the flowchart of Fig. 2.

In STEP0, at the time scheduled in the timer such as the sunrise, or when the output from the solar cell 1 reaches a certain value, otherwise manually, the controller 61 will provide output of a close signal (ON) to the system open/close relay 6. Prior to providing the output, the controller goes to STEP1.

In STEP1, the controller 61 provides a close signal (ON) to the bypass open/close relay 57 to close the bypass open/close relay 57. Then, the AC current from the commercial power system 7 flows in and charges the condenser 32 while suppressed by the positive thermistors 56. After a delay time (for example, about one second) set in the storage unit in the controller 61 elapses, the controller goes to STEP2.

In STEP2, the controller 61 provides a close signal to the system open/close relay 6 to close the system open/close relay 6 and then goes to STEP3.

In STEP3 , the controller 61 provides an open signal (OFF) to the bypass open/close relay 57 to open the bypass open/close relay 57. The above steps complete the closing of the system open/close relay 6. Thereafter, on opening the system open/ close relay 6 at sunset or the like, the controller 61 provides an open signal to the system open/close relay 6 without actuating the bypass open/close relay 57.

In this way, prior to providing the close signal to the system open/close relay 6, the controller 61 provides the close signal to the bypass open/close relay 57 to charge the condenser 32 in the current smoothing circuit 4 while suppressing the current by the positive thermistors 56. Then, after a certain period of time (for example, about one second) elapses, the controller provides the close signal to the system open/close relay 6 and the open signal to the bypass open/close relay 57. Accordingly, rush current can not flow in the condenser 32, and the deflective excitation of the current sensor 38 and the welding of contacts in the system open/close relay 6 are prevented.

The controller as the control means includes: 1) the means to provide the close signal to the bypass open/close relay before it provides the close signal to the system open/close relay; 2) the means to provide the close signal to the system open/close relay after it provides the close signal to the bypass open/close relay; and 3) the means to provide the open signal to the bypass open/close relay almost simultaneously when or after it provides the close signal to the system open/close relay.

In addition to the above means, the control means includes means corresponding to each step to be executed, which is operative to execute each step. It is not always required to include all of the above means.

### EXAMPLE 2

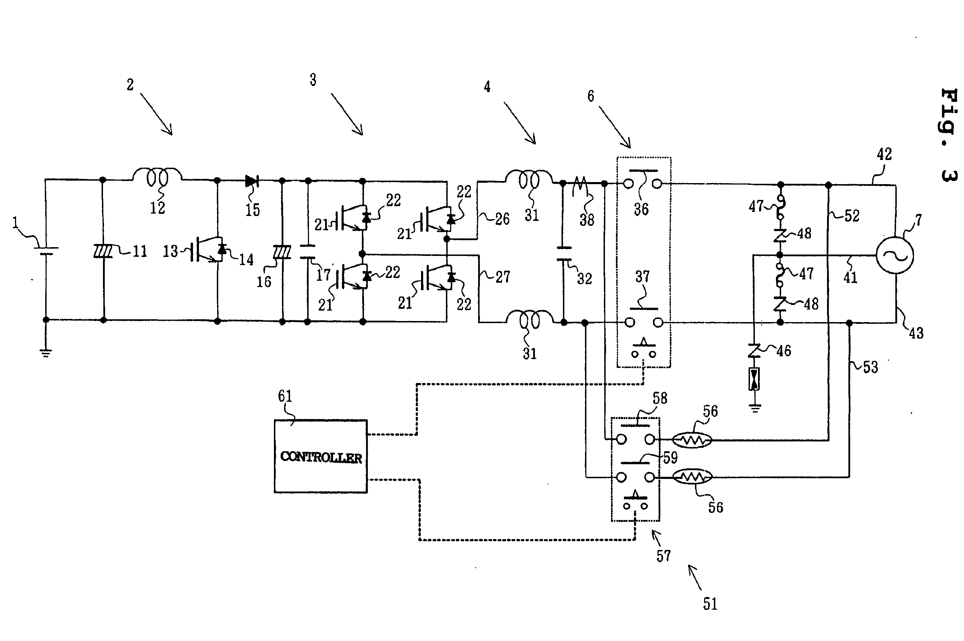

A second example of the interconnected generator system in the present invention is described next. Fig. 3 is a circuit diagram of the second example of the interconnected generator system. In the description of the second example those corresponding to the components of the preceding first example are denoted with the same reference numerals and omitted from the following detailed description.

The bypass circuit 51 is connected to the commercial power system on different locations between the first example and the second example, which are same in other parts. Thus, the configuration of the bypass circuit 51 may be changed appropriately as long as it is possible to operate in the open/close-switchable manner and to bypass the system open/close relay 6 to suppress the current from the commercial power system 7 by the positive thermistors 56 and allow the current to flow in the condenser 32 in the current smoothing circuit 4.

The examples of the invention have been described in detail though the present invention is not limited to the above examples but rather can be modified variously within the scope of the invention as recited in the appended claims. Modifications of the present invention may be exemplified as below.
(1) In the examples the bypass open/close relay 57 includes the two relay sections 58 , 59 and the positive thermistors 56 provided corresponding to the relay sections 58 , 59 though either one of the positive thermistors 56 may be omitted. If only one of the positive thermistors 56 is left, ground current may possibly flow in the relay section 58, 59 not provided with the positive thermistor 56 because a DC power portion is grounded close to the solar cell 1. Therefore, it is preferable to provide the positive thermistors 56 on the two bypass sections 52, 53 in the bypass circuit 51, respectively.
(2) The control means comprises a microcomputer though it may have another configuration.
(4) The sequence of the steps in each flowchart may be modified appropriately. For example, STEP3 may be executed immediately before or almost simultaneously with STEP2.
(5) The DC generator means may be other DC generator means such as a fuel cell instead of the solar cell.
(6) The booster circuit 2 may not be provided always.
(7) The booster circuit and the inverter circuit may have appropriately selectable structures and formats.

### INDUSTRIAL APPLICABILITY

The bypass circuit is provided to bypass the system open/close relay to connect the current smoothing circuit to the AC power system. The bypass circuit includes the positive thermistor and the bypass open/close relay. When the bypass open/close relay is closed, the current from the AC power system charges the condenser in the current smoothing circuit while suppressed by the positive thermistor. Therefore, when the system open/close relay is closed after completion of charging the condenser, rush current can be prevented from flowing in the condenser. Accordingly, it is optimally applicable to the interconnected generator system, which comprises: the inverter circuit operative to convert DC power from the DC power generator means into AC power; the current smoothing circuit operative to smooth the AC power; and the system open/close relay operative to feed the AC power therethrough to the commercial power system.

## Claims

1. An interconnected generator system, comprising:
a DC power generator means (1) operative to generate DC power;
an inverter circuit (3) operative to convert the DC power from the DC power generator means (1) into AC power;
a current smoothing circuit (4) including a condenser (32) and operative to smooth the AC power converted at the inverter circuit (4);
a system open/close relay (6) operative to connect the current smoothing circuit (4) to an AC power system (7) in an open/close-switchable manner; and
a sensor (38) for AC output current feedback being provided between the current smoothing circuit (4) and the system open/close relay (6), **characterized by**
a bypass circuity (51) is provided to bypass the system open/close relay (6) to connect the sensor (38) for AC output current feedback to the AC power,
wherein the bypass circuit (51) includes a positive thermistor (56) and a bypass open/close relay (57), and wherein the bypass circuit (51) breaks the flow through the bypass circuit when the bypass open/close relay (57) is opened and connects the current smoothing circuit (4) to the AC power system (7) via the positive thermistor (56) when the bypass open/close relay (57) is closed,
wherein a controller means (61) is provided to control open/close of system open/close relay (6) and the bypass open/close relay (57),
wherein the controller means (61) provides a close signal to the bypass open/close relay (57) before it provides a close signal to the system open/close relay (6),
wherein the control means (61) provides the open signal to the bypass open/close relay (57) almost simultaneously when or after it provides the close signal to the system open/close relay (6).

## Patentansprüche

1. Ein zwischengeschaltetes Generatorsystem, enthaltend:
ein Gleichstromgenerator-Mittel (1), um Gleichstrom zu erzeugen;
eine Inverterschaltung (3), um den Gleichstrom des Gleichstromgenerator-Mittels in Wechselstrom umzuwandeln;
eine Stromglättungsschaltung (4), die einen Kompensator (32) enthält und den Wechselstrom, der durch die Inverterschaltung (3) umgewandelt wurde, zu glätten;
ein System-Offen/Geschlossen-Relay (6), um die Stromglättungsschaltung (4) mit einem Wechselstromsystem (7) in einer offen/geschlossenschaltbaren Weise zu verbinden; und
einen Sensor (38) für eine Wechselspannungsausgangsrückmeldung, welche zwischen der Stromglättungsschaltung (4) und dem System-Offen/Geschlossen-Relay (6) angeordnet ist, **dadurch gekennzeichnet,**
**dass** eine Umgehungsschaltung (51) vorgesehen ist, um das System-Offen/Geschlossen-Relay (6) zu umgehen, um den Sensor (38) für die Wechselstromausgangrückmeldung mit dem Wechselstrom zu verbinden, wobei die Umgehungsschaltung (51) einen positiven Thermistor (56) und ein Umgehungsschaltungs-Offen/Geschlossen-Relay (57) enthält, und dass die Umgehungsschaltung (51) den Fluss durch die Umgehungsschaltung unterbricht, wenn das Umgehungsschaltungs-Offen/Geschlossen-Relay (57) geöffnet ist, und die Stromglättungsschaltung (4) mit dem Wechselstromsystem (7) über den positiven Thermistor verbindet, wenn das Umgehungsschaltung-Offen/Geschlossen-Relay (57) geschlossen ist,
**dass** ein Kontrollmittel (61) vorgesehen ist, um das Öffnen/Schließen des System-Offen/Geschlossen-Relays (6) und des Umgehungsschaltung-Offen/Geschlossen-Relays (57) zu steuern,
**dass** das Kontrollmittel (61) ein Schließsignal für das Umgehungsschaltungs-Offen/Geschlossen-Relay (57) bereitstellt, bevor es ein Schließsignal für das System-Offen/Geschlossen-Relay (6) bereitstellt,
und **dass** das Kontrollmittel (61) ein Öffnen-Signal für das Umgehungs-Offen/Geschlossen-Relay (57) beinahe gleichzeitig wenn oder nachdem es das Schließen-Signal für das System Offen/Geschlossen-Relay (6) erzeugt, bereitstellt.

## Revendications

1. Système de générateur interconnecté, comprenant :
des moyens de génération de puissance continue (1) pouvant être utilisés pour générer une puissance continue ;
un circuit d'onduleur (3) pouvant être utilisé pour convertir la puissance continue provenant des moyens de génération de puissance continue (1) en puissance alternative ;
un circuit de lissage de courant (4) comprenant un condensateur (32) et pouvant être utilisé pour lisser la puissance alternative convertie au niveau du circuit d'onduleur (3) ;
un relais d'ouverture/fermeture de système (6) pouvant être utilisé pour connecter le circuit de lissage de courant (4) à un système de puissance alternative (7) d'une manière à ouverture/fermeture commutables ; et
un capteur (38) pour une rétroaction de courant de sortie alternatif prévu entre le circuit de lissage de courant (4) et le relais d'ouverture/fermeture de système (6), **caractérisé par**
un circuit de dérivation (51) prévu pour contourner le relais d'ouverture/fermeture de système (6) pour connecter le capteur (38) pour une rétroaction de courant de sortie alternatif à la puissance alternative,
dans lequel le circuit de dérivation (51) comprend une thermistance positive (56) et un relais d'ouverture/fermeture de dérivation (57), et dans lequel le circuit de dérivation (51) coupe la circulation à travers le circuit de dérivation lorsque le relais d'ouverture/fermeture de dérivation (57) est ouvert et connecte le circuit de lissage de courant (4) au système de puissance alternative (7) par l'intermédiaire de la thermistance positive (56) lorsque le relais d'ouverture/fermeture de dérivation (57) est fermé,
dans lequel des moyens formant contrôleur (61) sont prévus pour commander l'ouverture/la fermeture du relais d'ouverture/fermeture de système (6) et du relais d'ouverture/fermeture de dérivation (57) ;
dans lequel les moyens formant contrôleur (61) fournissent un signal de fermeture au relais d'ouverture/fermeture de dérivation (57) avant de fournir un signal de fermeture au relais d'ouverture/fermeture de système (6),
dans lequel les moyens formant contrôleur (61) fournissent le signal d'ouverture au relais d'ouverture/fermeture de dérivation (57) presque simultanément à la fourniture ou après la fourniture du signal de fermeture au relais d'ouverture/fermeture de système (6).
